# EUROPÄISCHE PATENTSCHRIFT

(11) **EP 3 172 095 B1**
(45) Veröffentlichungstag und Bekanntmachung des Hinweises auf die Patenterteilung: **19.12.2018**
(21) Anmeldenummer: 15736265.8
(22) Anmeldetag: 10.07.2015
(51) Int. Cl.: B60S 1/34, B60S 1/38

(54) **QUICKFIX FÜR FINRAY-WISCHER**
QUICK FASTENING FOR FIN RAY WIPERS
SYSTÈME DE SOLUTION RAPIDE POUR ESSUIE-GLACE FINRAY

(30) Priorität: 24.07.2014 DE 102014214569
(43) Veröffentlichungstag der Anmeldung: 31.05.2017
(73) Patentinhaber: Robert Bosch GmbH, 70442 Stuttgart (DE)
(72) Erfinder: VAN EYNDHOVEN, Adriaan, 70180 Stuttgart (DE); HACKL, Viktor, H-9400 Sopron (HU); DEAK, Peter, H-1188 Budapest (HU); WEILER, Michael, 77815 Buehl (DE)
(86) Internationale Anmeldenummer: PCT/EP2015/065803
(87) Internationale Veröffentlichungsnummer: WO 2016/012270

(56) Entgegenhaltungen:
- DE-A1-102007 061 377
- DE-A1-102011 078 108
- DE-A1-102013 214 064
- FR-A1- 2 382 357

## Beschreibung

Die Erfindung betrifft eine Scheibenwischvorrichtung für ein Fahrzeug, insbesondere ein Kraftfahrzeug.

### Stand der Technik

Scheibenwischvorrichtungen haben typischerweise einen Wischarm oder Wischhebel, wobei ein Wischblatt auf der Scheibe eines Kraftfahrzeugs bewegt wird. Dabei wird das Wischblatt zwischen einer ersten Wendelage und einer zweiten Wendelage bewegt. Zu diesem Zweck ist der Wischarm über die Antriebswelle mit einem Wischermotor verbunden. Insbesondere auf Windschutzscheiben mit starken Krümmungsänderungen und bei großen Temperaturschwankungen verliert das Wischblatt leicht den Kontakt zur Scheibe. Hierdurch kann es, insbesondere bei stark gekrümmten Scheiben, zu ungewischten Wischbereichen bzw. zu Schleierbildung kommen.

Da ein Wischvorgang auf eine Vielzahl von Parametern optimiert werden muss, wie zum Beispiel eine Regenmenge auf der Scheibe, eine eventuell auftretende Schneelast auf der Scheibe, die Geschwindigkeit des Fahrzeugs und damit einhergehender Winddruck auf den Wischarm, kann eine Schleierbildung nicht auf einfache Weise durch Anpassung des Drucks des Wischarms auf die Windschutzscheibe zuverlässig verhindert werden. Daher ist es ein Bedürfnis, Scheibenwischvorrichtungen weiter zu verbessern.

Bei der Verbesserung gibt es eine Mehrzahl von Randbedingungen, die zusätzlich berücksichtigt werden sollten. Dabei ist es auch ein Bedürfnis, die Handhabung bzw. die Benutzerfreundlichkeit zu gewährleisten bzw. zu verbessern.

Aus der DE 10 2013 2014 064 A1 ist eine Scheibenwischvorrichtung mit einem Wischblatt gezeigt, dass ein langgestrecktes Oberteil, ein langgestrecktes Unterteil, sowie mehrere Verbindungselemente zum Verbinden des Oberteils und des Unterteils aufweist, wobei die Verbindungselemente entlang einer Längserstreckung des Wischblatt voneinander beabstandet und an dem Oberteil und/oder dem Unterteil mittels eines Drehgelenks angebracht sind, so dass die Verbindungselemente eine Bewegung des Oberteils relativ zum Unterteil ermöglichen.

Weiterhin ist eine Befestigung für einen Wischerarm aus der FR 2382357 A1 bekannt.

### Offenbarung der Erfindung

Es ist die Aufgabe der vorliegenden Erfindung, ein zuverlässiges, weitgehend schlierenfreies Wischen einer Scheibe eines Fahrzeugs zur Verfügung zu stellen und/oder eine verbesserte Scheibenwischvorrichtung mit einfacher Handhabung, insbesondere einfache Montage bzw. Demontage zur Verfügung zu stellen.
Diese Aufgabe wird gelöst durch eine Scheibenwischvorrichtung mit den Merkmalen gemäß Anspruch 1.
Gemäß einer Ausführungsform wird eine Scheibenwischvorrichtung für ein Fahrzeug mit einem an einer Antriebswelle befestigten Befestigungselement, insbesondere ein Kraftfahrzeug, zur Verfügung gestellt. Die Scheibenwischvorrichtung beinhaltet ein Wischblatt mit einem langgestreckten Oberteil, das zumindest teilweise biegbar ausgestaltet ist, einem langgestreckten Unterteil, das zumindest teilweise biegbar ausgestaltet ist, mehreren Verbindungselementen zum Verbinden des Oberteils und des Unterteils, wobei die Verbindungselemente entlang einer Längserstreckung des Wischblatts voneinander beabstandet sind, und wobei die Verbindungselemente ausgelegt sind, um eine Bewegung des Oberteils und des Unterteils relativ zueinander mit einer Bewegungskomponente entlang einer Längserstreckung des Wischblatts zu ermöglichen, und einem wischblattseitigen Befestigungsteil, wobei das wischblattseitige Befestigungsteil durch eine lineare Bewegung an dem Befestigungselement lösbar verbindbar ist, und das wischblattseitige Befestigungsteil mit dem Befestigungselement derart verbindbar ist, dass eine Rotationsposition um eine Achse senkrecht zur Längserstreckung des Wischblatts und senkrecht zur der linearen Bewegung durch ein Auflager und einen weiteren Kontaktpunkt definiert ist.

Gemäß einer weiteren nicht beanspruchten Ausführungsform wird ein Verfahren zur Montage einer Scheibenwischvorrichtung zur Verfügung gestellt. Das Verfahren beinhaltet das Bereitstellen einer Scheibenwischvorrichtung, insbesondere nach einem der der hier beschriebenen Ausführungsformen, und das Aufschieben des wischblattseitigen Befestigungsteils mit einer linearen Bewegung auf das Befestigungselement um einen Kraft- und/oder Formschluss zwischen dem wischblattseitigen Befestigungsteils und dem Befestigungselement auszubilden.

Bevorzugte Ausführungsformen und besondere Aspekte der Erfindung ergeben sich aus den abhängigen Ansprüchen, den Zeichnungen und der vorliegenden Beschreibung.

### Vorteile der Erfindung

Gemäß den hier beschriebenen Ausführungsformen der Erfindung können Scheibenwischvorrichtung für Fahrzeuge auf besonders günstige Weise und für eine Mehrzahl unterschiedlicher Einsatzgebiete einfach und mit verbesserten Randbedingungen montiert werden. Weiterhin ermöglichen die Ausführungsformen der Erfindung, ein zuverlässiges, weitgehend schlierenfreies Wischen einer Scheibe eines Fahrzeugs.
Gemäß einer Ausführungsform wird eine Scheibenwischvorrichtung für ein Fahrzeug mit einem an einer Antriebswelle befestigten Befestigungselement, insbesondere ein Kraftfahrzeug, zur Verfügung gestellt. Die Scheibenwischvorrichtung beinhaltet ein Wischblatt mit einem langgestreckten Oberteil, das zumindest teilweise biegbar ausgestaltet ist, einem langgestreckten Unterteil, das zumindest teilweise biegbar ausgestaltet ist, mehreren Verbindungselementen zum Verbinden des Oberteils und des Unterteils, wobei die Verbindungselemente entlang einer Längserstreckung des Wischblatts voneinander beabstandet sind, und wobei die Verbindungselemente ausgelegt sind, um eine Bewegung des Oberteils und des Unterteils relativ zueinander mit einer Bewegungskomponente entlang einer Längserstreckung des Wischblatts zu ermöglichen, und einem wischblattseitigen Befestigungsteil, wobei das wischblattseitige Befestigungsteil durch eine lineare Bewegung an dem Befestigungselement lösbar verbindbar ist, und das wischblattseitige Befestigungsteil mit dem Befestigungselement derart verbindbar ist, dass eine Rotationsposition um eine Achse senkrecht zur Längserstreckung des Wischblatts und senkrecht zur der linearen Bewegung durch ein Auflager und einen weiteren Kontaktpunkt definiert ist. Hierdurch kann ein one-click Befestigungskonzept zur Verfügung gestellt werden, bei dem insbesondere eine Rotationsbewegung in Richtung der Scheibe nicht überdefiniert ist.

Nach der Erfindung hat das wischblattseitige Befestigungsteil eine Kavität und eine in einer Seitenwand der Kavität angeordnete Öffnung, insbesondere wobei die Öffnung in einer einem Verbindungselement zugewandten Seitenwand der Kavität angeordnet ist. Durch eine solche Ausgestaltung kann die Scheibenwischvorrichtung bzw. das Wischblatt besonders einfach gefertigt werden.
Gemäß einer weiteren bevorzugten Ausführungsform beinhaltet die Scheibenwischvorrichtung ferner das Befestigungselement, wobei das Befestigungselement eine Betätigungsvorrichtung aufweist, die ausgelegt ist, um einen Kraft- und/oder Formschluss lösbar verbindbar herzustellen. Da die Betätigungsvorrichtung nicht am wischblattseitigen Befestigungsteil sondern am achsseitigen Befestigungselement zur Verfügung gestellt ist, kann die Ausgestaltung der Scheibenwischvorrichtung bzw. des Wischblatts besonders einfach sein. Zum Beispiel kann gemäß weiteren optionalen Ausführungsformen das wischblattseitige Befestigungsteil einteilig ausgebildet sein und/oder das wischblattseitige Befestigungsteil kann angepasst sein, um mittels eines Spritzgussverfahrens, insbesondere eines Spritzgussverfahrens mit einem Schritt zur Verfügung gestellt zu werden.

Nach der Erfindung haben das wischblattseitige Befestigungsteil ein oder mehr in der Kavität angeordnete Führungselemente und den Kontaktpunkt. Durch die Führungselemente kann eine Position in einer Richtung, die unabhängig von einer Rotation relativ zum Befestigungselement um eine Achse senkrecht zur Längserstreckung des Wischblatts und senkrecht zur der linearen Bewegung ist, vorgegeben werden. Der Kontaktpunkt kann zur Definition der Rotationsposition dienen.
Gemäß einer weiteren bevorzugten Ausführungsform kann das wischblattseitige Befestigungsteil metall-frei und/oder ohne bewegliche Elemente ausgebildet sein. Dies kann ebenfalls zu einer einfachen Ausgestaltung dienen. Zum Beispiel kann ein Wischblatt als Ersatzteil kostengünstig hergestellt werden.
Gemäß einer weiteren bevorzugten Ausführungsform kann das wischblattseitige Befestigungsteil ausgebildet sein, um eine Rotation relativ zum Befestigungselement um eine Achse senkrecht zur Längserstreckung des Wischblatts und senkrecht zur der linearen Bewegung relativ zum Befestigungselement zu ermöglichen, insbesondere wobei das Auflager einen Drehpunkt eines Hebels für die Rotation bildet. Hierdurch kann ein definierter Anpressdruck einer Wischlippe an eine Scheibe zur Verfügung gestellt werden. Zum Beispiel kann gemäß weiteren Ausführungsformen die Rotation des Befestigungsteils relativ zum Befestigungselement in einem Winkelbereich von 30° oder kleiner beschränkt ist. Es handelt sich folglich nicht um eine Rotation, die einem abklappen des Wischblatts von der Scheibe entspricht

Gemäß einer weiteren bevorzugten Ausführungsform können die mehreren Verbindungselemente an mehreren oberen Verbindungspositionen mit dem Oberteil und an mehreren unteren korrespondierenden Verbindungspositionen mit dem Unterteil verbunden sein, wobei bei der Bewegung des Oberteils und des Unterteils relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm. Hierdurch kann eine Kraftübertragung zwischen dem Oberteil und dem Unterteil zur Verfügung gestellt werden, die eine Scheibenwischvorrichtung ermöglicht, die gemäß dem Finray-Prinzip arbeitet.

Gemäß einer weiteren bevorzugten Ausführungsform kann die Scheibenwischvorrichtung ferner ein Krafterzeugungselement, insbesondere eine Feder, beinhalten, wobei das Krafterzeugungselement, insbesondere die Feder, angepasst ist, die Rotation relativ zum Befestigungselement um eine Achse senkrecht zur Längserstreckung des Wischblatts und senkrecht zur der linearen Bewegung relativ zum Befestigungselement herbeizuführen. Hierdurch kann die Kraft, mit der eine Wischlippe auf die Scheibe wirkt angepasst werden, zum Beispiel wenn diese basierend auf Temperaturschwankungen und anderen Einflüssen ungewünscht variiert. Ferner kann ein integrierter Ausgleich für den Einbau und/oder für Toleranzen zur Verfügung gestellt werden. Zum Beispiel kann ein Kriechen des Materials durch das Kraftelement kompensiert werden. Ferner kann ein translatorischer Höhenausgleich bzw. ein rotatorischer Ausgleich erfolgen

Gemäß einer weiteren bevorzugten Ausführungsform kann die Betätigungsvorrichtung zwischen einem Kopfteil und einem der mehreren Verbindungselemente angeordnet sein. Hierdurch kann eine integrierte Wischarm- bzw. Wischblatt Montage und Demontage mit einer simplen ergonomischen Bewegung zur Verfügung gestellt werden.

Gemäß einer weiteren bevorzugten Ausführungsform kann die Betätigungsvorrichtung zwei Druckknöpfe an den Seiten entlang der Längserstreckung der Scheibenwischvorrichtung haben. Hierdurch kann eine alternative ergonomische Handhabung zur Verfügung gestellt werden.

Gemäß einer weiteren nicht beanspruchten Ausführungsform wird ein Verfahren zur Montage einer Scheibenwischvorrichtung zur Verfügung gestellt. Das Verfahren beinhaltet das Bereitstellen einer Scheibenwischvorrichtung, insbesondere nach einem der der hier beschriebenen Ausführungsformen, und das Aufschieben des wischblattseitigen Befestigungsteils mit einer linearen Bewegung auf das Befestigungselement um einen Kraft- und/oder Formschluss zwischen dem wischblattseitigen Befestigungsteils und dem Befestigungselement auszubilden. Es kann ein Befestigungskonzept für die Montage und Demontage einer Scheibenwischvorrichtung, insbesondere mit einem one-click Prinzip, zur Verfügung gestellt werden. zum Beispiel kann gemäß einer weiteren bevorzugten Ausführungsform beim Aufschieben die Betätigungsvorrichtung in die Öffnung geführt werden.

### Kurze Beschreibung der Zeichnungen

Ausführungsbeispiele der Erfindung sind in den Figuren dargestellt und werden im Folgenden näher beschrieben. Es zeigen:
Figur 1A eine schematische Darstellung eines Teils eines Wischblatts in einer Längsschnittansicht gemäß Ausführungsform der Erfindung, wobei ein wischblattseitiges Befestigungsteil an einem Befestigungselement befestigt ist,
Figur 1B eine schematische Darstellung eines Wischblatts in einer Querschnittsansicht gemäß Ausführungsform der Erfindung, wobei ein wischblattseitiges Befestigungsteil an einem Befestigungselement befestigt ist,
Figur 2 eine schematische Darstellung eines Teils eines Wischblatts in einer Längsschnittansicht gemäß Ausführungsform der Erfindung, wobei ein wischblattseitiges Befestigungsteil an einem Befestigungselement befestigt ist,
Figur 3A eine schematische Darstellung eines Eingriffs eines Teils eines Befestigungselements mit einem Teil eines wischblattseitigen Befestigungsteils,
Figur 3B eine schematische Darstellung eines Ausschnitts eines Befestigungselements,
Figur 3C eine schematische Darstellung des wischblattseitigen Befestigungsteils,
Figuren 4A bis 4D eine schematische Darstellung der Montage eines Wischblatts an einem Befestigungselement,
Figur 5A schematische Darstellung eines weiteren Ausführungsbeispiels einer erfindungsgemäßen Scheibenwischvorrichtung in Form eines Wischerarms mit integriertem Wischblatt in einer Grundstellung,
Figur 5B eine schematische Darstellung des Wischerarms mit integriertem Wischblatt nach Fig. 5A in einer an eine Scheibe angelegten Stellung,
Figur 6 eine schematische Darstellung eines Wischblatts gemäß Ausführungsformen vorliegenden Erfindung in einer Grundstellung,
Figur 7 eine schematische Darstellung eines Wischblatts gemäß Ausführungsformen der vorliegenden Erfindung in einer an eine Scheibe angelegten Stellung, und
Figur 8 eine Diagramm zur Illustration eines Verfahrens zur Montage einer Scheibenwischvorrichtung gemäß Ausführungsformen der vorliegenden Erfindung.

### Ausführungsformen der Erfindung

Im Folgenden werden, sofern nicht anders vermerkt, für gleiche und gleichwirkende Elemente gleiche Bezugszeichen verwendet.

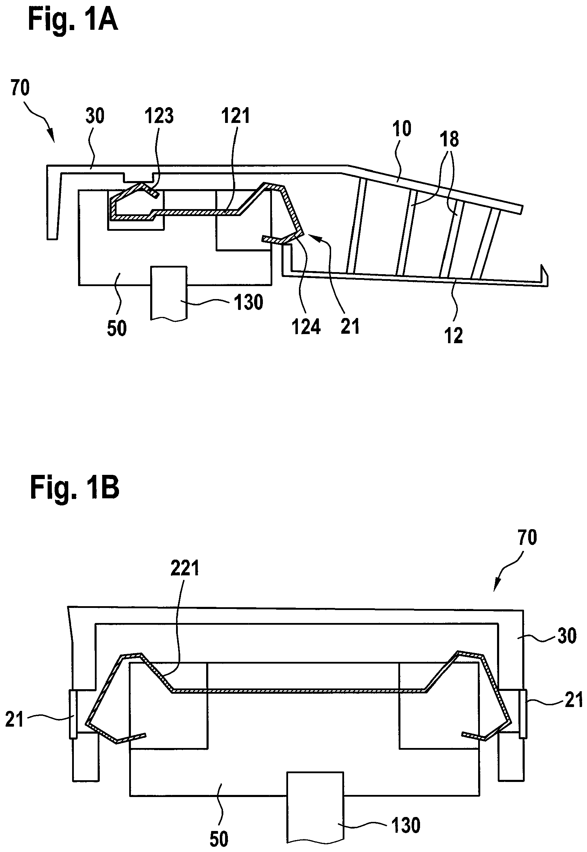

Figur 1 zeigt eine schematische Darstellung eines Ausschnitts eines Wischblatts 2 einer Scheibenwischvorrichtung für ein Fahrzeug, insbesondere für ein Kraftfahrzeug, in einer an eine Scheibe 4 angelegten Stellung. Das Wischblatt 2 umfasst ein langgestrecktes Oberteil 10 und einem langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung des Wischblatts 2 zu ermöglichen. Hierbei sind die Verbindungselemente an dem Oberteil 10 an einer jeweiligen oberen Verbindungsposition verbunden und an dem Unterteil 12 an einer jeweiligen unteren Verbindungsposition.

Zum Beispiel ist an den Verbindungspositionen jeweils ein Drehgelenk zur Verfügung gestellt. Bei einer Bewegung des Oberteils 10 des Unterteil 12 relativ zueinander verändert sich der Abstand einer oberen Verbindungsposition zu einer unteren Verbindungsposition am selben Verbindungselement im Wesentlichen nicht, d.h. der Abstand ist mit Abweichungen von zum Beispiel ±1 mm, insbesondere ±0,3 mm konstant.

Weiter hat das Wischblatt 2 ein Kopfende 70. Am Kopfende ist ein Befestigungsteil 30, d.h. ein wischblattseitiges Befestigungsteil 30, zur Verfügung gestellt. Entlang der Längserstreckung des Wischblatts 2 wird der Abstand zwischen dem Oberteil 10 und dem Unterteil 12 ausgehend vom Kopfende kleiner, zumindest in Bereichen der Längserstreckung des Wischblatts bzw. in einer überwiegenden Teil der Längserstreckung des Wischblatts. Ausgehend vom Kopfende läuft die Höhe des Wischblatts in Bereichen keilförmig zu bzw. wird in Bereichen der Längserstreckung kleiner. Zum Beispiel kann gemäß Ausführungsformen für eine Mehrzahl der Verbindungselemente die Länge der Verbindungselemente derart zur Verfügung gestellt werden, dass die am Kopfende zur Verfügung gestellten Verbindungselemente länger sind als die an der gegenüberliegenden Seite des Wischblatts entlang der Längserstreckung.

Durch diese Eigenschaften kann ein Wischblatt zur Verfügung gestellt werden, dass nach dem Finray-Prinzip funktioniert. Diese Scheibenwischvorrichtung haben typischerweise kein Gelenk um das Wischblatts oder eine Wischlippe von einer Scheibe, zum Beispiel einer Scheibe eines Kraftfahrzeugs, abzuheben. Zum Beispiel wird das Wischblatts 2 mittels eines Schnellverschlusses (Quickfix) von einem an einer Antriebswelle 130 zur Verfügung gestellten Befestigungselement 50 gelöst.

Figur 1A zeigt das wischblattseitige Befestigungsteil 30 und das Befestigungselement 50. Zum Anbringen des Wischblatts 2 bzw. zum Lösen des Wischblatts findet eine translatorische Bewegung statt, die zum Beispiel im Wesentlichen entlang der Achse der Antriebswelle 130 ausgerichtet sein kann. Gegebenenfalls kann diese Bewegung einen Winkel mit der Antriebswelle von ± 15° oder kleiner einschließen. Eine Torsion bzw. eine Rotation des Befestigungsteils 30 um eine Achse parallel zur Längserstreckung des Wischblatts kann durch Führungselemente im Befestigungsteil 30 oder ein Befestigungselement 50 begrenzt oder ausgeschlossen werden.

Gemäß Ausführungsformen der vorliegenden Erfindung wird eine Rotationsposition um eine Achse senkrecht zur Längserstreckung des Wischblatts und senkrecht zur Achse der Antriebswelle (oder senkrecht zur linearen Montagerichtung) durch einen ersten Kontaktpunkt und einen zweiten Kontaktpunkt zwischen dem wischblattseitigen Befestigungsteil 30 und im Befestigungselement 50 festgelegt. Die Lage des Wischblatts 2 wird somit definiert ohne überbestimmt zu sein.

Gemäß Ausführungsformen der vorliegenden Erfindung wird der erste Kontaktpunkt durch ein Auflager, d.h. einen rotationspunkt eines Hebels, zur Verfügung gestellt, das zwischen der Rotationsachse der Antriebswelle 130 und einem Verbindungselement 18 zur Verfügung gestellt ist, und einem Anschlag, der zum Beispiel auf der gegenüberliegenden Seite der Antriebswelle 130 zur Verfügung gestellt ist.

Figur 1A zeigt ein Federelement 121. Das Federelement 121 bildet mit einem Teil des Unterteil 12 das Auflager 230. Ferner beinhaltet das Federelement 121 eine Abschlagsfeder 123, die den Anschlag zur Definition der Rotationsposition zur Verfügung stellt. Gemäß weiteren Ausführungsformen ist in Befestigungselement 50 weiterhin eine Betätigungsvorrichtung 21 zur Verfügung gestellt, so dass das Befestigungsteil mit dem Befestigungselements lösbar verbinden war einen Kraft-und/oder Formschluss bildet. Die Betätigungsvorrichtung 21 kann als Mechanismus das Federelement 121 nutzen.

Figur 1B zeigt eine weitere Ausführungsform der Erfindung. Figur 1B zeigt einen Querschnitt senkrecht zur Längserstreckung eines Wischblatts 2, wobei ein Bereich des Kopfendes 70 dargestellt ist. Das Federelement 221, das in Figur 1B dargestellt ist, ist derart ausgestaltet, eine Betätigungsvorrichtung 21 durch zwei Druckpositionen rechts und links am Befestigungsteil 30 zur Verfügung zu stellen. Das Auflager und der Anschlag sind in Figur 1B nicht dargestellt. Zum Beispiel können die Druckpositionen durch weiche Kappen (zum Beispiel TPU), die im wischblattseitigen Befestigungsteil integriert sind, abgedeckt sein.

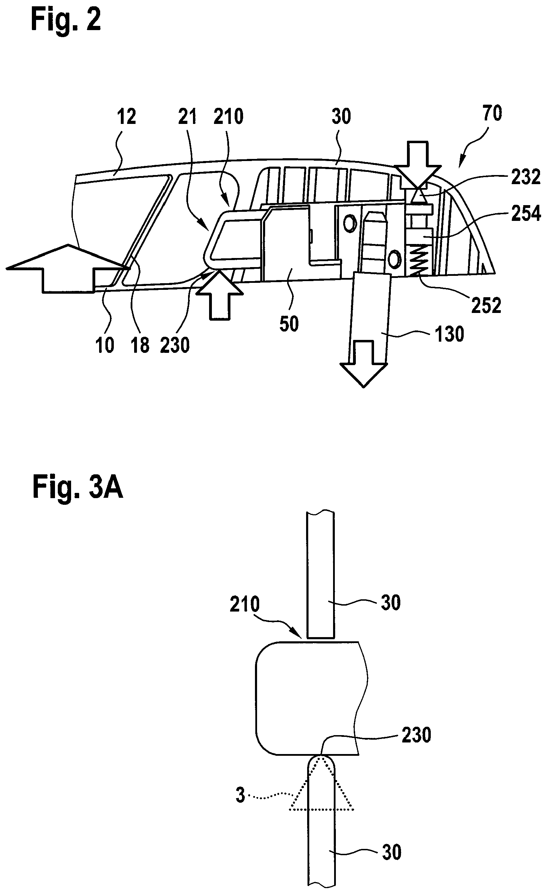

Figur 2 zeigt einen weiteren Ausschnitt eines Wischblatts 2, wobei am Kopfende 70 des Wischblatts 2 ein Befestigungsteil 30 ausgebildet ist, das heißt ein wischblattseitiges Befestigungsteil, das mit einem Befestigungselement 50 lösbar verbinden war ist. Das Befestigungselement 50 ist auf einer Antriebswelle 130 zur Verfügung gestellt. Das Befestigungselement 50 wird zum Beispiel an der Antriebswelle angeklemmt, so dass eine Rotation der Antriebswelle 130 auf das Befestigungselement 50 übertragen wird. Diese Rotation wird wiederum auf das Befestigungsteil 30 übertragen, so dass das Wischblatts 2 auf einer Scheibe eines Fahrzeugs, zum Beispiel eines Kraftfahrzeugs, rotiert.

Das Wischblatt 2 beinhaltet ein Oberteil 12 ein Unterteil 10 und mehrere Verbindungselemente 18. Das Befestigungsteil 30 beinhaltet eine Kavität und eine Öffnung 210. Die Kavität ist eingerichtet, um das Befestigungselement 50 aufzunehmen. Die Öffnung 210 ist angepasst, so dass im montierten Zustand eine Betätigungsvorrichtung 21 in die Öffnung eingeführt werden kann. Ein unterer Bereich der Öffnung 210 bildet das Auflager 230, wobei der untere Bereich der Bereich der Öffnung 210 ist, der einer Scheibe zugewandt ist.

Gemäß Ausführungsformen der vorliegenden Erfindung kann der Anschlag 232, der am Befestigungselement 50 zur Verfügung gestellt ist, um mit einer entsprechenden Position des Befestigungsteils 30 die Rotationsposition zu definieren, an einem beweglichen Element 254 zur Verfügung gestellt werden. Das bewegliche Element 254 kann zum Beispiel ein in einer Führung beweglicher Pin sein. Die Bewegung des beweglichen Elements 254 kann durch eine Feder 252 definiert werden, die eine Kraft für den Anschlag 232 aufbringt. Verstärkt sich zum Beispiel eine Kraft, die beim Wischen des Wischblatts 2 auf das Unterteil 10 wirkt, wird über den Hebel der Anschlag 232 nach unten bewegt, das heißt die Feder 252 wird mit einer stärkeren Kraft belastet. Das bewegliche Element 254 bewegt sich nach unten. Der Anschlag 232 hat hierbei eine variable Position, wobei ein Hebel um das Auflager 230 existiert.

Wie oben beschrieben wird durch das Auflager und einen Anschlag, das heißt einen ersten Kontaktpunkt und einen zweiten Kontaktpunkt, eine Rotationsposition um eine Achse senkrecht zur Längserstreckung des Wischblatts und senkrecht zur Achse der Antriebswelle in Abhängigkeit einer Kraft auf das Wischblatt zur Verfügung gestellt. In Abhängigkeit der Kraft kann das Wischblatt um eine Achse senkrecht zur Längserstreckung des Wischblatts und senkrecht zur Achse der Antriebswelle rotieren.

Gemäß manchen Ausführungsformen, die mit anderen Ausführungsformen kombiniert werden können, kann eine auf die Unterseite des Wischblatts bzw. eine an der Unterseite befestigten Wischlippe wirkenden Kraft von 2 Newton bis 10 Newton, zum Beispiel ungefähr 5 Newton, über einen Hebelverhältnis einer Federkraft von 8 Newton bis 40 Newton, ungefähr 20 Newton entsprechen.

Gemäß noch weiteren Ausführungsformen, die mit anderen Ausführungsformen kombiniert werden können, kann ein Befestigungselement 50 auch ohne Feder ausgestaltet werden. Hierbei wird durch den Anschlag 232 eine feste Rotationsposition zur Verfügung gestellt. Es wird aus dem beweglichen Element 254 ein festes Element. Gemäß noch weiteren Ausführungsformen, kann die Position des Anschlags durch unterschiedliche Längen dieses festen Elements bzw. durch unterschiedliche Adapter bzw. Aufsätze auf das feste Element zur Verfügung gestellt werden. Es kann durch diese vordefinierte Variation des Anschlags bzw. des Kontaktpunkts zum Beispiel die Verwendung einer Scheibenwischvorrichtung auf einem spezifischen Fahrzeugtyp eingestellt werden.

Figur 3A zeigt weitere Details des Auflagers 230, dass exemplarisch durch ein Dreieck 3 dargestellt ist. Hierzu ist in einem Ausschnitt ein Teil des Befestigungsteils 30 gezeigt. Ferner stellt die Betätigungsvorrichtung 21 ein Teil des Befestigungselements 50 zur Verfügung, das mit dem Befestigungsteil 30 einen Eingriff bildet. Das Befestigungsteil 30 hat eine Öffnung 210. Die Betätigungsvorrichtung 21 kann in die Öffnung 210 eingeführt werden um einen Kraft-und oder Formschluss zu bilden. Zum Lösen des Befestigungsteils 30 von den Befestigungselement 50 wird die Betätigungsvorrichtung 21 gedrückt, um durch die Öffnung 210 im Befestigungsteil 30 bewegt zu werden.

Eine Unterseite der Öffnung 210 des Befestigungsteils 30 bildet das Auflager 230 für einen Teil des Befestigungselements 50, zum Beispiel die Betätigungsvorrichtung 21. Gemäß manchen Ausführungsformen, kann der Rand des Befestigungsteils 30 an der Unterseite der Öffnung 210 mit einer Krümmung oder einem Radius zur Verfügung gestellt werden, so dass eine definierte Position des Auflagers zur Verfügung gestellt werden kann. Auch bei einer endlichen Dicke der Wandstärke des Befestigungsteils 30 kann hier durch eine definierte Hebelposition zur Verfügung gestellt werden. Zum Beispiel kann die Wand stärke des Befestigungsteils 30 0,5 bis 3 mm, insbesondere 1 bis 2 mm betragen.

An der Oberseite der Öffnung 210 kann zwischen dem Teil des Befestigungselements 50, zum Beispiel der Betätigungsvorrichtung 21, und dem Befestigungsteil 30 ein Spalt zur Verfügung gestellt werden, um eine Rotationsposition um eine Achse senkrecht zur Längserstreckung des Wischblatts und senkrecht zur Achse der Antriebswelle an der Oberseite der Öffnung 210 nicht zu beschränken. Durch den Spalt wird die Rotationsposition nicht überdefiniert.

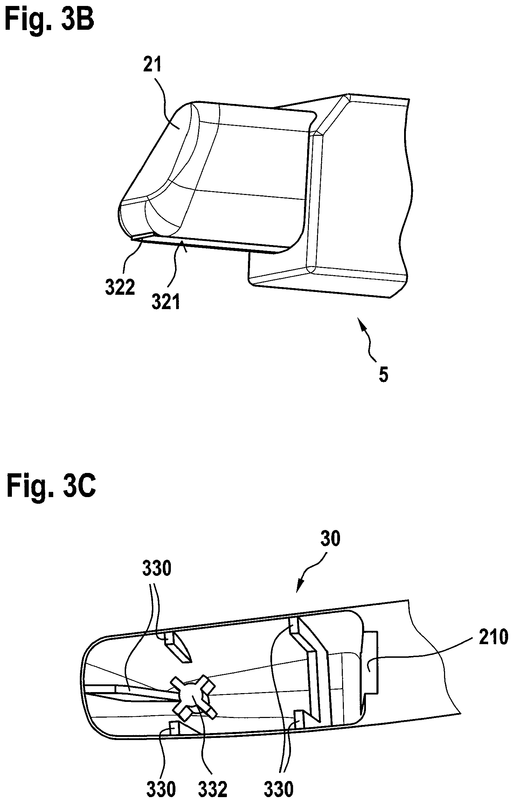

Figur 3B zeigt einen Ausschnitt des Befestigungselements 50, wobei die Betätigungsvorrichtung 21 und insbesondere die Unterseite der Betätigungsvorrichtung 21 dargestellt ist. An der Unterseite der Betätigungsvorrichtung 21 ist eine vergrößerte Fläche 321 mit einer Kante 322, d.h. eine Fläche die unterseitig größer ist im Vergleich zu einer Fläche mit homogenem Verlauf der Oberfläche, zur Verfügung gestellt. Durch die vergrößerte Fläche 321 bzw. die Kante 322 kann die Wahrscheinlichkeit reduziert werden, dass die Betätigungsvorrichtung 21 ungewünschte aus der Öffnung 210 des Befestigungsteils 30 gleitet, sobald der Rotationspunkt des Auflagers bzw. des Hebels in den Bereich der gekrümmten Kante der Betätigungsvorrichtung, d.h. der unteren Kante mit dem Radius, der Betätigungsvorrichtung 21 gelangt. Gemäß typischen Ausführungsformen hat die Betätigungsvorrichtung an dem Ende, das der Öffnung im wischblattseitigen Befestigungsteil zugewandt ist, zum Beispiel mit Ausnahme der vergrößerten Fläche 321, abgerundete Kanten bzw. einen Radius von 2 mm und mehr an den Kanten, um eine flüssige Montage und Demontage zu ermöglichen.

Figur 3C illustriert weitere Merkmale, Details und Aspekte des Befestigungsteils 30 gemäß Ausführungsform der Erfindung, die optional zur Verfügung gestellt werden können. Das Befestigungsteil 30 beinhaltet eine Öffnung 210, die im in Figur 3C vorliegenden Querschnitt, teilweise dargestellt ist. Darüber hinaus beinhaltet das Befestigungsteil 30 eine Kavität. In der Kavität können ein oder mehrere Führungselemente 330 zur Verfügung gestellt werden. Gemäß manchen Ausführungsformen kann eine Kontaktposition 332 für den Anschlag in einem korrespondierenden Befestigungselement 50 zur Verfügung gestellt werden.

Gemäß manchen Ausführungsformen kann das Befestigungsteil 30 bzw. das Wischblatt 20 dadurch zur Verfügung gestellt werden, das mechanische Elemente wie Federn, Federelemente, Betätigungsvorrichtung und/oder metallische Elemente nicht in dem Befestigungsteil 30 sondern in einem korrespondierenden Befestigungselement 50 zur Verfügung gestellt werden. Das Befestigungsteil 30 ist somit angepasst, um in einem Spritzgussverfahren, insbesondere einem einfachen Spritzgussverfahren bzw. einem Spritzgussverfahren mit einem Schritt zur Verfügung gestellt zu werden. Zum Beispiel besteht das Befestigungselement 30 lediglich aus einem Material. Das Befestigungselement 30 hat eine Öffnung 210 und eine Kavität. Optional können in dem einen Material Ausformungen wie Führungsschienen oder eine Kontaktposition zur Verfügung gestellt werden.

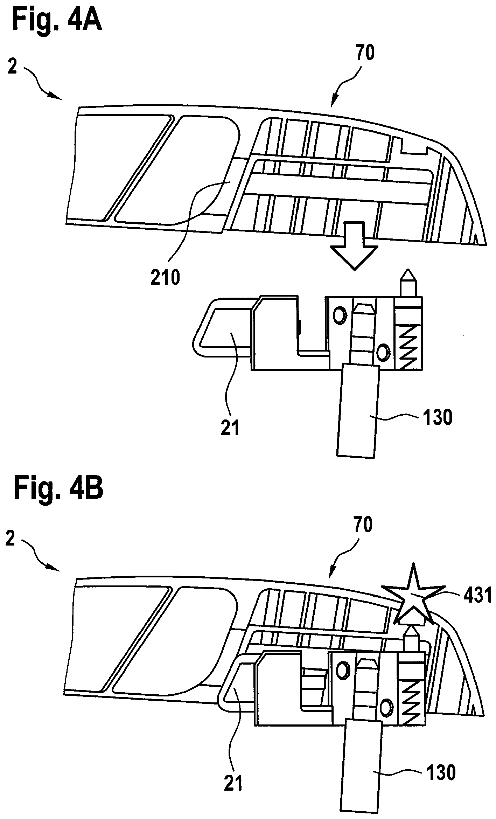

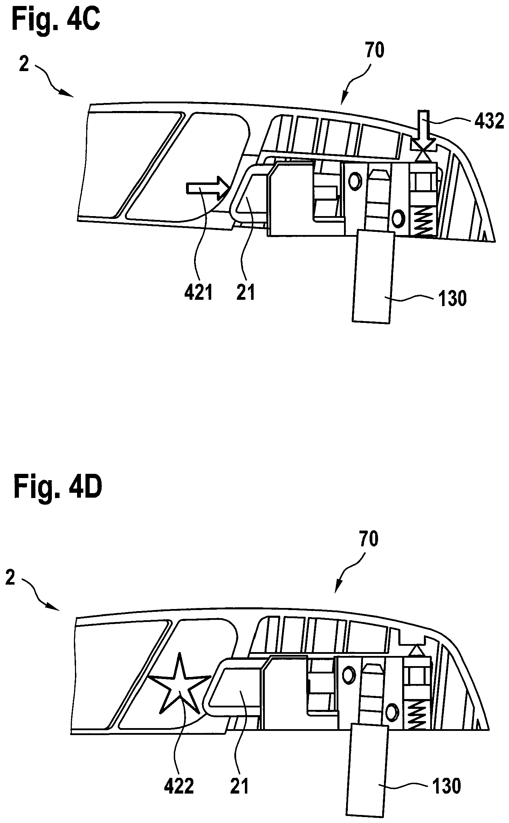

Die Figuren 4A bis 4D zeigen die Befestigung eines Wischblatts 2 mithilfe der Befestigungsvorrichtung, das heißt einem Quickfix, gemäß Ausführungsformen der vorliegenden Erfindung. Das Wischblatt 2 hat am Kopfende 70 ein Befestigungsteil 30. Das Befestigungsteil beinhaltet eine Kavität und eine Öffnung 210. Auf der Antriebswelle 130 ist ein Befestigungselement 50 zur Verfügung gestellt. Das Befestigungselement 50 beinhaltet zum Beispiel die Betätigungsvorrichtung 21.

Wie durch den Pfeil in Figur 4A dargestellt, wird das Wischblatt mit einer translatorischen Bewegung bzw. einer linearen Bewegung montiert. Hierbei wird das Befestigungsteil 30 auf das Befestigungselement 50 linear aufgesetzt. Gemäß typischen Ausführungsformen verläuft die lineare Bewegung im Wesentlichen entlang bzw. parallel der Achse der Antriebswelle 130. Die Richtung der linearen Bewegung kann jedoch auch zum Beispiel in einem kleinen Winkelbereich von der Achse der Antriebswelle abweichen. Zum Beispiel kann der Winkelbereich Winkel von 10° oder weniger einschließen.

Figur 4B zeigt wie der Anschlag des Befestigungselements 50 mit der entsprechenden Kontaktposition am Befestigungsteil 30 in Kontakt tritt. Dies ist durch entstanden 431 schematische illustriert. Die Betätigungsvorrichtung 21 bewegt sich in Figur 4B bereits in einen Bereich der Öffnung 210. Bei einem weiteren fortschreiten der translatorischen Bewegung wird, wie in Figur 4C dargestellt die Betätigungsvorrichtung 21 gedrückt (siehe Pfeil 421). Der Pin, dessen Ende den Anschlag bildet, wird ebenfalls bewegt (siehe Pfeil 432.

Zum Einrasten bewegt sich die Betätigungsvorrichtung 21 in die Öffnung 210. Diese Bewegung kann zum Beispiel durch ein Federelement zur Verfügung gestellt werden. Das Einrasten ist durch Stern 422 schematisch illustriert. Zwischen der Betätigungsvorrichtung 21 und einer unteren Kante der Öffnung 210 wird ein Auflager, das heißt zum Beispiel ein Rotationspunkt eines Hebels, zwischen dem Befestigungsteil 30 und im Befestigungselement 50 zur Verfügung gestellt. Der Anschlag zwischen dem Beginn des Befestigungselements 50 und der Kontaktposition im Befestigungsteil 30 bildet einen zweiten Kontaktpunkt. Hierbei wird Rotationsposition um eine Achse senkrecht zur Längserstreckung des Wischblatts und senkrecht zur Achse der Antriebswelle 130 definiert, insbesondere ohne über definiert zu werden.

Im Folgenden werden Aspekte einer beispielhafte Scheibenwischvorrichtung beschrieben, für welche die hierin beschriebenen Ausführungsformen der Scheibenwischvorrichtung, insbesondere die beschriebene Montage bzw. Demontage mit einem wischblattseitigen Befestigungsteil und einem Befestigungselement vorteilhaft sind. Der Wischarm bzw. das Wischblatt können hierbei besonders einfach zur Verfügung gestellt werden, wobei zum Beispiel der Wischer bzw. die Scheibenwischvorrichtung, die an einem Fahrzeug montiert wird, ausschließlich aus Kunststoff besteht. Zum Beispiel kann die Scheibenwischvorrichtung ohne Metallteile und/oder ohne mechanische Elemente zur Verfügung gestellt werden.

Gemäß manchen Ausführungsformen der vorliegenden Erfindung, kann eine Feder in der Betätigungsvorrichtung 21 und/oder für den Anschlag 232 (siehe 252) zur Verfügung gestellt werden. Weiterhin ist es gemäß Ausführungsformen möglich (siehe Figur 1A) ein oder beide der Federelemente durch ein Federelement 121, zum Beispiel ein Federblech, zur Verfügung zu stellen. Hierdurch kann eine kostengünstigere Herstellung zur Verfügung gestellt werden.

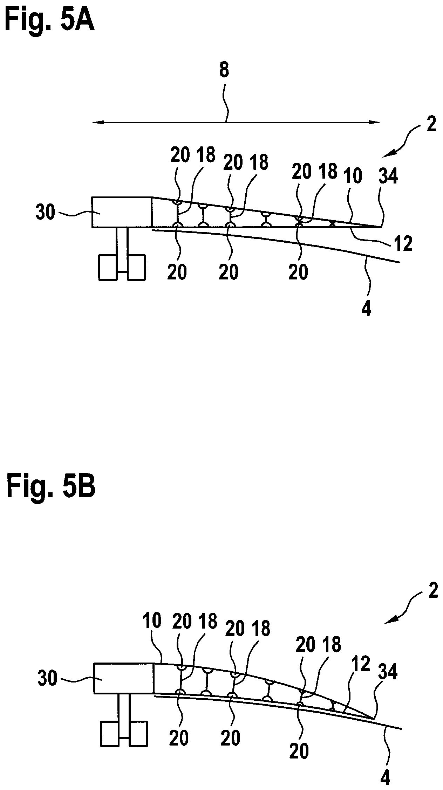

Figuren 5A und 5B zeigen schematische Darstellungen eines Wischblatts 2 in einer Grundstellung und in einer an eine Scheibe angelegten Stellung gemäß Ausführungsformen der Scheibenwischvorrichtung der Offenbarung. Es werden hier Fin-Ray-Wischer beschrieben, für die eine Kompensationsschicht 13 gemäß hier beschriebenen Ausführungsformen besonders nützlich ist. Die Kompensationsschicht 13 ist in den Figuren 5A, 5B, 6 und 7 nicht erneut dargestellt und kann auch in diesen Ausführungsformen wie zuvor beschrieben zur Verfügung gestellt werden. Das Wischblatt 2 dient zum Wischen einer Scheibe 4 eines Fahrzeugs, das zum Beispiel ein Kraftfahrzeug ist, insbesondere ein Auto. Das Wischblatt 2 hat eine Längserstreckung 8 und weist ein langgestrecktes Oberteil 10 und ein ebenfalls langgestrecktes Unterteil 12 auf. Die Längserstreckungen des Oberteils 10 und des Unterteils 12 entsprechen im Wesentlichen der Längserstreckung 8 des Wischblatts 2.

Sowohl das Oberteil 10 als auch das Unterteil 12 sind biegbare Balken oder können als biegbare Balken ausgestaltet sein Es ist ebenso möglich, nur jeweils einen Teil des Oberteils 10 und/oder des Unterteils 12 biegbar auszugestalten. Gemäß manchen Ausführungsformen, die mit den anderen hier beschriebenen Ausführungsformen kombiniert werden können, wird für das Oberteil 10 und/oder das Unterteil 12 ein Material eingesetzt, das einen Elastizitätsmodul hat, der in einem Bereich zwischen 0,005 kN/mm² und 0,5 kN/mm², insbesondere 0,01 kN/mm² und 0,1 kN/mm², liegt. Dies ermöglicht eine geeignete Biegefähigkeit des Oberteils 10 und des Unterteils 12. Zusammen mit einer geeignet ausgestalteten Querschnittsfläche des Oberteils 10 und des Unterteils 12 ergibt sich so eine optimale Biegesteifigkeit.

Das Oberteil 10 und das Unterteil 12 sind an einem Befestigungsteil 30 befestigt. Die Scheibenwischvorrichtung kann mittels des Befestigungsteils 30 zum Beispiel mit einer Quickfix-Befestigung am Fahrzeug verbunden sein. An der Seite, die dem Befestigungsteil 30 entlang der Längserstreckung der Scheibenwischvorrichtung gegenüberliegt, ist das Oberteil 10 und das Unterteil 12 an einer Verbindungsposition 34 verbunden. Die Verbindungselemente sind derart ausgestaltet, dass sich der Abstand der Verbindungsposition mit dem Oberteil und der Abstand der Verbindungsposition mit dem Unterteil um maximal ±1 mm ändert, insbesondere um maximal +. 0,3 mm ändert (zum Beispiel durch Wärmeausdehnung und/oder Zug und Druckbelastung). Die Verbindungselement können somit im Wesentlichen nicht elastisch ausgebildet bzw. der Effekt der Verbindungselemente beruht auf deren Kraftübertragung zwischen Oberteil und Unterteil und nicht auf deren Elastizität.

Das Oberteil 10 und das Unterteil 12 sind durch Verbindungselemente 18 miteinander verbunden. Die Verbindungselemente 18 sind an einander zugewandten inneren Längsseiten des Oberteils 10 und des Unterteils 12 mittels Drehgelenken 20 befestigt. Typischerweise sind die Drehgelenke 20 Scharniere. Insbesondere können die Drehgelenke 20 als Filmscharniere ausgebildet sein. Dies ist vor allem dann vorteilhaft, wenn das Oberteil 10, das Unterteil 12 und/oder die Verbindungselemente 18 aus einem Kunststoffmaterial hergestellt oder mit einem geeigneten Kunststoffmaterial überzogen sind.

Gemäß typischen hier beschriebenen Ausführungsformen, die mit anderen hier beschriebenen Ausführungsformen kombiniert werden können, ist ein Drehgelenk aus der folgenden Gruppe ausgewählt, die besteht aus: einem Scharnier, einem Filmscharnier, einer Verjüngung des Materials zur Erzeugung geringerer Steifigkeit entlang einer Torsionsachse, einem Gelenk mit einer Rotationsachse, einem Mittel zur Verbindung des Oberteils mit dem Verbindungselement oder zur Verbindung des Unterteils mit dem Verbindungselement, das die Verschiebung des Unterteils in Bezug auf das Oberteil entlang der Längserstreckung erlaubt, etc.

Ausführungsformen, bei denen die Gelenke durch Filmscharniere zur Verfügung gestellt sind, stellen somit eine sehr einfache Art und Weise zur Verfügung, um die Gelenke für einen Fin-Ray-Wischer zur Verfügung zu stellen. Das Wischblatt 2 kann einteilige, insbesondere werkzeugfallend, zur Verfügung gestellt werden. Gemäß typischen Ausführungsformen haben die Filmscharniere eine hohe Dehnbarkeit. Dies kann zum Beispiel durch ein Material ausgewählt aus der Gruppe PP, PE, POM, und PA, zur Verfügung gestellt werden. Alternativ können die Filmscharniere aus einem oder mehreren Materialen aus einer Gruppe bestehend aus: TPE (Thermoplastischem Elastomer), beispielsweise TPE-S, TPE-O, TPE-U, TPE-A TPE-V und TPE-E hergestellt sein.

Die Verbindungselemente 18 sind entlang der Längserstreckung des Wischblatts 2 voneinander beabstandet. Die Abstände sind vorteilhafterweise kleiner als 50 mm, insbesondere kleiner als 30 mm. Dadurch kann eine besonders hohe Flexibilität der Scheibenwischvorrichtung, insbesondere ihres Unterteils, und gute Anpassung an die Krümmung und Krümmungsänderungen der zu wischenden Scheibe gewährleistet werden.

Fig. 5B zeigt eine schematische Darstellung des Wischblatts 2 nach Fig. 5A in einer an die Scheibe 4 angelegten Stellung. Da die Scheibe 4 eine Krümmung hat, wirken beim Anlegen des Wischblatts 2 an die Scheibe 4 Kontaktdruckkräfte auf das Unterteil 12. Da das Oberteil 10 und das Unterteil 12 biegbare Balken und die Verbindungselemente 12 drehbar an Oberteil 10 und Unterteil 12 gelagert sind, sind das Oberteil 10 und das Unterteil 12 gegeneinander verschiebbar. Durch die von unten auf das Unterteil 12 wirkenden Druckkräfte biegt sich das Wischblatt 2 in diejenige Richtung, aus der die Druckkräfte kommen, und legt sich genau an die Krümmung der Scheibe 4 an.

Durch den Aufbau der hier beschriebenen Ausführungsformen, findet bei einer Krafteinwirkung auf das Unterteil (durch die Scheibe 4) eine Biegung des Unterteils in die Richtung statt, aus der die Kraft wirkt. Dies ist durch die Verbindung des Oberteils 10 und des Unterteils an der Verbindungsposition 34, die Form, und durch Drehgelenke an der Verbindung zwischen den Verbindungselementen und dem Ober- bzw. Unterteil gegeben. Eine Scheibenwischvorrichtung gemäß hier beschriebener Ausführungsformen nutzt den Effekt von Schwanzflossen bestimmter Fische, die bei seitlichem Druck nicht in Druckrichtung ausweichen, sondern sich in entgegengesetzte Richtung wölben, d. h. in die Richtung, aus der der Druck kommt. Dieses Prinzip wird auch als Flossenstrahl-Prinzip oder "Fin Ray"-Prinzip bezeichnet. Dadurch hat eine Scheibenwischvorrichtung gemäß den hierin beschriebenen Ausführungsformen den Vorteil einer verbesserten Anpassung an eine Scheibe eines Kraftfahrzeugs. Bei einem herkömmlichen Scheibenwischblatt ist dessen Oberteil üblicherweise starr, d. h. es ist nicht biegbar ausgebildet.

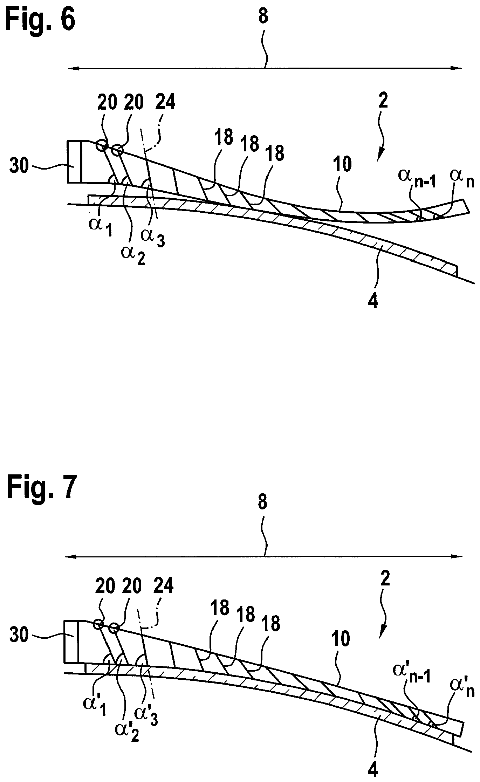

Figuren 6 und 7 zeigen schematische Darstellungen eines Wischblatts 2 einer Scheibenwischvorrichtung für ein Fahrzeug, insbesondere für ein Kraftfahrzeug, in einer Grundstellung (Figur 6), d.h. in einem unbelastetem Zustand, und in einer an eine Scheibe 4 angelegten Stellung (Figur 7) gemäß den hierein beschrieben Ausführungsformen. Das Wischblatt 2 umfasst ein langgestrecktes Oberteil 10 und ein langgestrecktes Unterteil 12, welche zumindest teilweise biegbar ausgestaltet sind. Des Weiteren sind mehrere Verbindungselemente 18 zum Verbinden des Oberteils 10 und des Unterteils 12 vorgesehen, wobei die Verbindungselemente 18 entlang einer Längserstreckung 8 des Wischblatts 2 voneinander beabstandet sind. Die Verbindungselemente 18 sind ausgelegt, um eine Bewegung des Oberteils 10 und des Unterteils 12 relativ zu einander mit einer Bewegungskomponente entlang einer Längserstreckung 8 des Wischblatts 2 zu ermöglichen. Des Weiteren sind die Verbindungselemente 18 relativ zum Unterteil 12 so angeordnet, dass sich in einem unbelasteten Zustand des Wischblatts 2 ein Winkel αₙ der jeweiligen Längsachsen 24 der Verbindungselemente 18 relativ zum Unterteil 12 zumindest teilweise entlang einer Längserstreckung 8 des Wischblatts 2 verändert, insbesondere stetig verändert bzw. monoton oder streng monoton verändert.

In dem in Figur 6 dargestellten Wischblatt im unbelastetem Zustand sind die Winkel αₙ der jeweiligen Längsachsen der Verbindungselemente 18 relativ zum Unterteil 12, die sich entlang der Längserstreckung 8 des Wischblatts 2 ändern, mit α₁, α₂, α₃, ... αₙ₋₁, αₙ bezeichnet. In einem belasteten Zustand des Wischblatts, d.h. in einer an die Scheibe angelegten Stellung, wie sie beispielhaft in Fig. 7 dargestellt ist, verändern sich die Winkel αₙ der jeweiligen Längsachsen 24 der Verbindungselemente 18 relativ zum Unterteil 12 im Vergleich zum unbelasteten Zustand. Um dies zum Ausdruck zu bringen sind die Winkel αₙ der jeweiligen Längsachsen der Verbindungselemente 18 relativ zum Unterteil 12, die sich entlang der Längserstreckung 8 des Wischblatts 2 ändern, in dem in Fig. 2 dargestellten Wischblatt, welches sich in einer an die Scheibe angelegten Position befindet, mit α'₁, α'₂, α'₃, ... α'ₙ₋₁, α'ₙ bezeichnet.

Gemäß Ausführungsformen der Scheibenwischvorrichtung, welche mit anderen Ausführungsformen kombiniert werden können, weist das Wischblatt 2 zumindest einen ersten Bereich auf, in dem der Winkel αₙ der Längsachsen 24 der Verbindungselemente 18 relativ zum Unterteil 12 entlang einer Längserstreckung 8 des Wischblatts 2 zu einem Wischblattende hin abnimmt, insbesondere monoton, insbesondere streng monoton, abnimmt. Ferner kann das Wischblatt 2 zumindest einen zweiten Bereich aufweisen, in dem der Winkel αₙ der Längsachsen 24 der Verbindungselemente 18 relativ zum Unterteil 12 entlang einer Längserstreckung 8 des Wischblatts 2 zu einem Wischblattende hin zunimmt, insbesondere monoton, insbesondere streng monoton, zunimmt. Gemäß Ausführungsformen, wie beispielhaft in den Figuren 6 und 7 dargestellt, ist der zweite Bereich des Wischblatts, in dem der Winkel αₙ der Längsachsen 24 der Verbindungselemente 18 relativ zum Unterteil 12 entlang der Längserstreckung 8 des Wischblatts 2 zu einem Wischblattende hin zunimmt, an einer inneren Position des Wischblatts angeordnet, welche sich in der Nähe einer Befestigungsvorrichtung 30 des Wischblatts befindet. Dadurch kann eine Scheibenwischvorrichtung zur Verfügung gestellt werden, welche eine besonders gute Anpassung an die Krümmung einer Scheibe ermöglicht. Ferner kann ein weitgehend gleichmäßiger Anpressdruck der Scheibenwischvorrichtung auf der Scheibe als auch eine homogene Kraftverteilung der Scheibenwischvorrichtung bereitgestellt werden, so dass eine hohe Wischqualität bereitgestellt wird.

Gemäß Ausführungsformen des Wischblatts, welche mit anderen Ausführungsformen kombiniert werden können, sind die Verbindungselemente 18, insbesondere in einem unbelastetem Zustand des Wischblatts 2, so an dem Unterteil 12 befestigt, dass die Längsachsen 24 der Verbindungselemente 18 in Winkeln αₙ zum Unterteil 12 verlaufen, die zwischen einem unteren Winkelgrenzwert αₙᵤ und einem oberen Grenzwert αₙₒ liegen. Gemäß Ausführungsformen, ist der untere Winkelgrenzwert αₙᵤ = 10°, insbesondere αₙᵤ = 15°, insbesondere αₙᵤ = 20° und der obere Winkelgrenzwert αₙₒ = 80°, insbesondere αₙₒ = 90° insbesondere αₙₒ = 100°. Dies gewährleistet vorteilhafterweise eine besonders gute Übertragung einer auf das Unterteil wirkenden Kraft auf das Oberteil.

Gemäß Ausführungsformen der Scheibenwischvorrichtung, welche mit anderen Ausführungsformen kombiniert werden können, sind die Verbindungselemente 18 derart konfiguriert sind, dass sich der Abstand zwischen dem Oberteil 10 und dem Unterteil 12 zumindest teilweise entlang einer Längserstreckung 8 des Wischblatts 2 verändert, insbesondere in einem ersten Bereich stetig verkleinert und in einem zweiten Bereich stetig vergrößert. Der Abstand zwischen dem Oberteil 10 und dem Unterteil 12 entlang der Längserstreckung 8 des Wischblatts 2 kann auch einen Bereich umfassen, in welchem der Abstand zwischen dem Oberteil 10 und dem Unterteil 12 entlang der Längserstreckung 8 des Wischblatts 2 im Wesentlichen konstant ist. Der Abstand zwischen dem Oberteil 10 und dem Unterteil 12 ist am Befestigungsteil größer als am gegenüberliegenden Ende.

Gemäß Ausführungsformen des Wischblatts, welche mit anderen Ausführungsformen kombiniert werden können, beträgt der innere (dem Befestigungsteil zugewandte) Abstandswert mindestens 15 mm, insbesondere mindestens 25 mm, insbesondere mindestens 35 mm. Gemäß Ausführungsformen, welche mit anderen Ausführungsformen kombiniert werden können, beträgt der äußere Abstandswert mindestens 10 mm, insbesondere mindestens 12,5 mm, insbesondere mindestens 15 mm. Gemäß Ausführungsformen, welche mit anderen Ausführungsformen kombiniert werden können, beträgt der mittlere Abstandswert mindestens 7,5 mm, insbesondere mindestens 9 mm, insbesondere mindestens 12,5 mm.

Wie in den Figuren 6 bis 7 beispielhaft dargestellt, sind die Verbindungselemente 18 gemäß Ausführungsformen, welche mit anderen Ausführungsformen kombiniert werden können, gelenkig mit dem Unterteil 12 und/oder dem Oberteil 10 verbunden. Insbesondere sind die Verbindungselemente 18 mit dem Unterteil 12 und/oder dem Oberteil 10 mittels eines ersten Filmscharniers 20 verbunden. Das erste Filmscharnier 20 kann einteilig mit dem Verbindungselement 18 und dem Oberteil 10 und/oder dem Unterteil 12 ausgebildet sein. Die einteilige Ausgestaltung der Filmscharniere erlaubt eine einfache und kostengünstige Herstellung.

Gemäß Ausführungsformen des Wischblatts, welche mit anderen hierin beschriebenen Ausführungsformen kombiniert werden können, umfasst das Wischblatt einen ersten Bereich mit einer ersten Krümmung ω<0 und einen zweiten Bereich mit einer zweiten Krümmung ω>0. Ferner kann das Wischblatt gemäß Ausführungsformen einen dritten Bereich mit einer dritten Krümmung ω<0 aufweisen, wobei der zweite Bereich des Wischblatts mit der zweiten Krümmung ω>0 zwischen dem ersten Bereich mit der ersten Krümmung ω<0 und dem dritten Bereich mit der dritten Krümmung ω<0 angeordnet ist, wie es beispielhaft in Fig. 6 gezeigt ist. Somit kann eine Scheibenwischvorrichtung zur Verfügung gestellt werden mit welcher ein weitgehend gleichmäßiger Anpressdruck auf die Scheibe 4 realisiert werden kann. Ferner kann eine Scheibenwischvorrichtung bereitgestellt werden, welche eine verbesserte Anpassung an die Scheibe 4 und eine hohe Wischqualität aufweist.

Gemäß weitern Ausführungsformen kann zusätzlich zu einem für Fin-Ray-Wischer verwendbaren Quickfix-Befestigungsverschluss, bei dem die gesamte Scheibenwischvorrichtung von einer Antriebsachse bzw. einem Befestigungselement an der Antriebsachse am Fahrzeug entfernt wird, einen Mechanismus zur Verfügung gestellt werden, um das Wischblatt 2 einer Scheibenwischvorrichtung von der Scheibe 4 abzuheben bzw. auf diese aufzusetzen. Dies vereinfacht weiter die Benutzung, zum Beispiel für eine manuelle Reinigung der Scheibe 2.

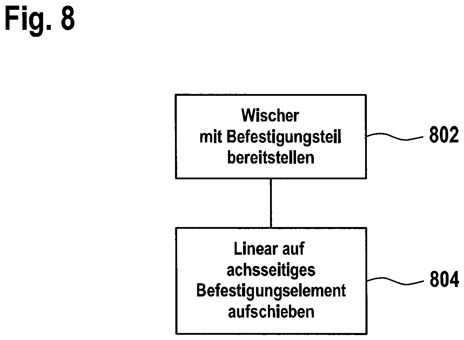

In Figur 8 wird ein Verfahren zur Montage einer Scheibenwischvorrichtung gemäß hier beschriebenen Ausführungsformen illustriert. Ein Wischer mit einem wischblattseitigen Befestigungsteil wird zur Verfügung gestellt (siehe 802) und in einer linearen Bewegung auf ein achsseitiges Befestigungselement aufgeschoben (siehe 804). Insbesondere handelt es sich um eine Scheibenwischvorrichtung, die nach dem Finray-Prinzip funktioniert, wobei ein wischblattseitiges Befestigungsteil durch eine Kavität mit einer Öffnung zur Verfügung gestellt wird. Typischerweise befindet sich die Öffnung in einem 1. Ausschnitt entlang der Längserstreckung des Wischblatts d.h., zwischen dem Kopfende und einem ersten Verbindungselement.

## Patentansprüche

1. Scheibenwischvorrichtung (100) für ein Fahrzeug mit einem an einer Antriebswelle befestigten Befestigungselement (50), insbesondere ein Kraftfahrzeug, umfassend ein Wischblatt (2) mit
- einem langgestreckten Oberteil (10), das zumindest teilweise biegbar ausgestaltet ist,
- einem langgestreckten Unterteil (12), das zumindest teilweise biegbar ausgestaltet ist,
- mehreren Verbindungselementen (18) zum Verbinden des Oberteils (10) und des Unterteils (12), wobei die Verbindungselemente (18) entlang einer Längserstreckung (8) des Wischblatts (2) voneinander beabstandet sind, und wobei die Verbindungselemente (18) ausgelegt sind, um eine Bewegung des Oberteils (10) und des Unterteils relativ zueinander mit einer Bewegungskomponente entlang einer Längserstreckung (8) des Wischblatts (2) zu ermöglichen, und
- einem wischblattseitigen Befestigungsteil (30), **dadurch gekennzeichnet, dass** das wischblattseitige Befestigungsteil (30) durch eine lineare Bewegung an dem Befestigungselement lösbar verbindbar ist, und das wischblattseitigen Befestigungsteil (30) mit dem Befestigungselement derart verbindbar ist, dass eine Rotationsposition um eine Achse senkrecht zur Längserstreckung des Wischblatts und senkrecht zur der linearen Bewegung durch ein Auflager und einen weiteren Kontaktpunkt definiert ist, wobei das wischblattseitige Befestigungsteil eine Kavität und eine in einer Seitenwand der Kavität angeordnete Öffnung hat, insbesondere wobei die Öffnung in einer einem Verbindungselement zugewandten Seitenwand der Kavität angeordnet ist, und wobei das wischblattseitige Befestigungsteil ein in der Kavität angeordnetes Führungselement und den Kontaktpunkt hat.

2. Scheibenwischvorrichtung (100) nach einem der Ansprüche 1 bis 2, weiterhin umfassend:
das Befestigungselement (50), wobei das Befestigungselement (50) eine Betätigungsvorrichtung (21) aufweist, die ausgelegt ist, um einen Kraft- und/oder Formschluss lösbar herzustellen.

3. Scheibenwischvorrichtung nach einem der Ansprüche 1 bis 2, wobei das wischblattseitige Befestigungsteil einteilig ausgebildet ist.

4. Scheibenwischvorrichtung nach einem der Ansprüche 1 bis 3, wobei das wischblattseitige Befestigungsteil angepasst, um mittels eines Spritzgussverfahrens, insbesondere eines Spritzgussverfahrens mit einem Schritt zur Verfügung gestellt zu werden.

5. Scheibenwischvorrichtung nach einem der Ansprüche 1 bis 4, wobei das wischblattseitige Befestigungsteil metall-frei und/oder ohne bewegliche Elemente ausgebildet ist.

6. Scheibenwischvorrichtung (100) nach einem der Ansprüche 1 bis 5, wobei das wischblattseitige Befestigungsteil ausgebildet ist, um eine Rotation relativ zum Befestigungselement um eine Achse senkrecht zur Längserstreckung des Wischblatts und senkrecht zur der linearen Bewegung relativ zum Befestigungselement (50) zu ermöglichen, insbesondere wobei das Auflager einen Drehpunkt eines Hebels für die Rotation bildet.

7. Scheibenwischvorrichtung (100) nach Anspruch 6, wobei die Rotation des Befestigungsteils relativ zum Befestigungselement in einem Winkelbereich in einem Winkelbereich von 30° oder kleiner beschränkt ist.

8. Scheibenwischvorrichtung (100) nach einem der Ansprüche 1 bis 7, wobei die mehreren Verbindungselemente an mehreren oberen Verbindungspositionen mit dem Oberteil und an mehreren unteren korrespondierenden Verbindungspositionen mit dem Unterteil verbunden sind, und wobei bei der Bewegung des Oberteils und des Unterteils relativ zueinander der Abstand zwischen einer oberen Verbindungspositionen und einer korrespondierenden unteren Verbindungsposition, im Wesentlichen konstant ist, insbesondere konstant ist mit einer Abweichung von ±1 mm.

9. Scheibenwischvorrichtung (100) nach einem der Ansprüche 1 bis 8, weiterhin umfassend:
- ein Krafterzeugungselement, insbesondere eine Feder, wobei das Krafterzeugungselement, insbesondere die Feder, angepasst ist, die Rotation relativ zum Befestigungselement um eine Achse senkrecht zur Längserstreckung des Wischblatts und senkrecht zur der linearen Bewegung relativ zum Befestigungselement herbeizuführen.

10. Scheibenwischvorrichtung (100) nach einem der Ansprüche 2 bis 9, wobei die Betätigungsvorrichtung (21) zwischen einem Kopfteil und einem der mehreren Verbindungselemente angeordnet ist.

11. Scheibenwischvorrichtung nach einem der Ansprüche 2 bis 9, wobei die Betätigungsvorrichtung (21) zwei Druckknöpfe an den Seiten entlang der Längserstreckung der Scheibenwischvorrichtung umfasst.

## Claims

1. Window wiper device (100) for a vehicle having a fastening element (50) fastened to a drive shaft, in particular a motor vehicle, comprising a wiper blade (2) having
- an elongate upper part (10) which is at least partially of flexible form,
- an elongate lower part (12) which is at least partially of flexible form,
- multiple connecting elements (18) for connecting the upper part (10) and the lower part (12), wherein the connecting elements (18) are spaced apart from one another along a longitudinal extent (8) of the wiper blade (2), and wherein the connecting elements (18) are designed to permit a movement of the upper part (10) and of the lower part relative to one another with a movement component along a longitudinal extent (8) of the wiper blade (2), and
- a wiper-blade-side fastening part (30),
**characterized in that** the wiper-blade-side fastening part (30) is detachably connectable to the fastening element by way of a linear movement, and the wiper-blade-side fastening part (30) is connectable to the fastening element such that a rotational position about an axis perpendicular to the longitudinal extent of the wiper blade and perpendicular to the linear movement is defined by a support bearing and by a further contact point, wherein the wiper-blade-side fastening part has a cavity and has an opening arranged in a side wall of the cavity, wherein in particular, the opening is arranged in a side wall, which faces toward a connecting element, of the cavity, and wherein the wiper-blade-side fastening part has a guide element arranged in the cavity and the contact point.

2. Window wiper device (100) as claimed in either of Claims 1 and 2, furthermore comprising:
the fastening element (50), wherein the fastening element (50) has an actuating device (21) which is designed to releasably realize a non-positively locking and/or positively locking engagement action.

3. Window wiper device as claimed in either of Claims 1 and 2, wherein the wiper-blade-side fastening part is formed in one piece.

4. Window wiper device as claimed in one of Claims 1 to 3, wherein the wiper-blade-side fastening part is designed to be provided by way of an injection molding process, in particular by way of an injection molding process with one step.

5. Window wiper device as claimed in one of Claims 1 to 4, wherein the wiper-blade-side fastening part is formed so as to be free from metal and/or without movable elements.

6. Window wiper device (100) as claimed in one of Claims 1 to 5, wherein the wiper-blade-side fastening part is designed to permit a rotation relative to the fastening element about an axis perpendicular to the longitudinal extent of the wiper blade and perpendicular to the linear movement relative to the fastening element (50), wherein in particular, the support bearing forms a fulcrum of a lever for the rotation.

7. Window wiper device (100) as claimed in Claim 6, wherein the rotation of the fastening part relative to the fastening element is restricted to an angle range to an angle range of 30° or less.

8. Window wiper device (100) as claimed in one of Claims 1 to 7, wherein the multiple connecting elements are connected at multiple upper connecting positions to the upper part and at multiple lower corresponding connecting positions to the lower part, and wherein, during the movement of the upper part and of the lower part relative to one another, the spacing between an upper connecting position and a corresponding lower connecting position is substantially constant, in particular is constant with a deviation of ± 1 mm.

9. Window wiper device (100) as claimed in one of Claims 1 to 8, furthermore comprising:
- a force-generating element, in particular a spring, wherein the force-generating element, in particular the spring, is designed to effect the rotation relative to the fastening element about an axis perpendicular to the longitudinal extent of the wiper blade and perpendicular to the linear movement relative to the fastening element.

10. Window wiper device (100) as claimed in one of Claims 2 to 9, wherein the actuating device (21) is arranged between a head part and one of the multiple connecting elements.

11. Window wiper device (100) as claimed in one of Claims 2 to 9, wherein the actuating device (21) has two pushbuttons on the sides along the longitudinal extent of the window wiper device.

## Revendications

1. Dispositif d'essuie-glace (100) pour un véhicule comprenant un élément de fixation (50) fixé à un arbre d'entraînement, en particulier un véhicule automobile, comprenant un balai d'essuie-glace (2), comprenant :
- une partie supérieure allongée (10), qui est configurée au moins en partie de manière flexible,
- une partie inférieure allongée (12), qui est configurée au moins en partie de manière flexible, et
- plusieurs éléments de connexion (18) pour la connexion de la partie supérieure (10) et de la partie inférieure (12), les éléments de connexion (18) étant espacés les uns des autres le long d'une étendue longitudinale (8) du balai d'essuie-glace (2), et les éléments de connexion (18) étant conçus pour permettre un mouvement de la partie supérieure (10) et de la partie inférieure l'un par rapport à l'autre avec une composante de mouvement le long d'une étendue longitudinale (8) du balai d'essuie-glace (2), et
- une partie de fixation (30) du côté du balai d'essuie-glace,
**caractérisé en ce que** la partie de fixation (30) du côté du balai d'essuie-glace peut être connectée de manière amovible par un mouvement linéaire à l'élément de fixation, et la partie de fixation (30) du côté du balai d'essuie-glace peut être connectée à l'élément de fixation de telle sorte qu'une position de rotation autour d'un axe perpendiculairement à l'étendue longitudinale du balai d'essuie-glace et perpendiculairement au mouvement linéaire soit définie par un appui et un point de contact supplémentaire, la partie de fixation du côté du balai d'essuie-glace présentant une cavité et une ouverture disposée dans une paroi latérale de la cavité, en particulier l'ouverture étant disposée dans une paroi latérale de la cavité tournée vers un élément de connexion, et la partie de fixation du côté du balai d'essuie-glace présentant un élément de guidage disposé dans la cavité et le point de contact.

2. Dispositif d'essuie-glace (100) selon l'une quelconque des revendications 1 et 2, comprenant en outre :
l'élément de fixation (50), l'élément de fixation (50) présentant un dispositif d'actionnement (21) qui est conçu pour créer de manière amovible un engagement par force et/ou par correspondance de formes.

3. Dispositif d'essuie-glace selon l'une quelconque des revendications 1 à 2, dans lequel la partie de fixation du côté du balai d'essuie-glace est réalisée d'une seule pièce.

4. Dispositif d'essuie-glace selon l'une quelconque des revendications 1 à 3, dans lequel la partie de fixation du côté du balai d'essuie-glace adaptée pour être fournie au moyen d'un procédé de moulage par injection, en particulier d'un procédé de moulage par injection en une étape.

5. Dispositif d'essuie-glace selon l'une quelconque des revendications 1 à 4, dans lequel la partie de fixation du côté du balai d'essuie-glace est réalisée sans métal et/ou sans éléments mobiles.

6. Dispositif d'essuie-glace (100) selon l'une quelconque des revendications 1 à 5, dans lequel la partie de fixation du côté du balai d'essuie-glace est réalisée de manière à permettre une rotation par rapport à l'élément de fixation autour d'un axe perpendiculairement à la direction d'étendue du balai d'essuie-glace et perpendiculairement au mouvement linéaire par rapport à l'élément de fixation (50), en particulier l'appui formant un centre de rotation d'un levier pour la rotation.

7. Dispositif d'essuie-glace (100) selon la revendication 6, dans lequel la rotation de la partie de fixation par rapport à l'élément de fixation est limitée à une plage angulaire à une plage angulaire de 30° au moins.

8. Dispositif d'essuie-glace (100) selon l'une quelconque des revendications 1 à 7, dans lequel la pluralité d'éléments de connexion sont connectés à la partie supérieure au niveau de plusieurs positions de connexion supérieures et sont connectés à la partie inférieure au niveau de plusieurs positions de connexion correspondantes inférieures, et dans lequel, lors du mouvement de la partie supérieure et de la partie inférieure l'une par rapport à l'autre, la distance entre une position de connexion supérieure et une position de connexion inférieure correspondante est essentiellement constante, en particulier est constante, avec un écart de ± 1 mm.

9. Dispositif d'essuie-glace (100) selon l'une quelconque des revendications 1 à 8, comprenant en outre :
un élément de génération de force, en particulier un ressort, l'élément de génération de force, en particulier le ressort, étant adapté pour provoquer la rotation par rapport à l'élément de fixation autour d'un axe perpendiculairement à l'étendue longitudinale du balai d'essuie-glace et perpendiculairement au mouvement linéaire par rapport à l'élément de fixation.

10. Dispositif d'essuie-glace (100) selon l'une quelconque des revendications 2 à 9, dans lequel le dispositif d'actionnement (21) est disposé entre une partie de tête et l'un de la pluralité d'éléments de connexion.

11. Dispositif d'essuie-glace selon l'une quelconque des revendications 2 à 9, dans lequel le dispositif d'actionnement (21) comprend deux boutons-pression au niveau des côtés le long de l'étendue longitudinale du dispositif d'essuie-glace.
